# FASCICULE DE BREVET EUROPEEN

(11) **EP 2 542 390 B1**
(45) Date de publication et mention de la délivrance du brevet: **20.11.2013**
(21) Numéro de dépôt: 11702846.4
(22) Date de dépôt: 11.02.2011
(51) Int. Cl.: B25J 9/16, B25J 19/02

(54) **PROCEDE ET SYSTEME D'AIDE A LA MANIPULATION D'ENGINS ROBOTISES EN ENVIRONNEMENT ENCOMBRE**
VERFAHREN UND SYSTEM ZUR UNTERSTÜTZUNG DER HANDHABUNG VON ROBOTISCHEN MASCHINEN IN EINER ÜBERLASTETEN UMGEBUNG
METHOD AND SYSTEM FOR ASSISTING IN THE HANDLING OF ROBOTIZED MACHINES IN A CONGESTED ENVIRONMENT

(30) Priorité: 02.03.2010 FR 1000851
(43) Date de publication de la demande: 09.01.2013
(73) Titulaire: Commissariat à l'Énergie Atomique et aux Énergies Alternatives, 75015 Paris (FR)
(72) Inventeur: DAVID, Olivier, F-91430 Igny (FR); MEASSON, Yvan, F-75014 Paris (FR); RUSSOTTO, François-Xavier, F-92190 Meudon (FR)
(74) Mandataire: Lucas, Laurent Jacques
(86) Numéro de dépôt international: PCT/EP2011/052076
(87) Numéro de publication internationale: WO 2011/107337

(56) Documents cités:
- JP-A- 3 287 394
- JP-A- 4 030 981
- JP-A- 6 015 594
- JP-A- 61 230 896
- BAUMANN M ET AL: "Path Planning for Improved Visibility Using a Probabilistic Road Map", IEEE TRANSACTIONS ON ROBOTICS, IEEE SERVICE CENTER, PISCATAWAY, NJ, US, vol. 26, no. 1, 1 février 2010 (2010-02-01), pages 195-200, XP011288551, ISSN: 1552-3098, DOI: DOI:10.1109/TRO.2009.2035745
- MARCHAND E ET AL: "Dynamic sensor planning in visual servoing", ROBOTICS AND AUTOMATION, 1998. PROCEEDINGS. 1998 IEEE INTERNATIONAL CO NFERENCE ON LEUVEN, BELGIUM 16-20 MAY 1998, NEW YORK, NY, USA,IEEE, US, vol. 3, 16 mai 1998 (1998-05-16), pages 1988-1993, XP010281530, DOI: DOI:10.1109/ROBOT.1998.680607 ISBN: 978-0-7803-4300-9 cité dans la demande

## Description

La présente invention a pour objet un procédé et un système d'aide à la manipulation d'engins robotisés au sein d'un environnement encombré, en particulier dans le cadre d'un processus de téléopération.

La téléopération est le contrôle et la commande à distance par un opérateur humain d'un bras manipulateur, d'un engin mobile ou de tout autre dispositif articulé et motorisé. Dans la suite de la description, un tel dispositif sera désigné par le terme manipulateur. Dans un système complet de téléopération, l'opérateur humain interagit à distance avec le manipulateur par l'intermédiaire d'un bras articulé maitre dont les mouvements sont capturés, transmis et reproduits par le manipulateur. Pour effectuer cette manipulation en temps-réel, l'opérateur a besoin en permanence d'un retour visuel de qualité sur l'environnement de travail qui lui permette d'exécuter la tâche en cours précisément et en toute sécurité. Ce point de vue visuel est délivré par une caméra embarquée sur le système qui comporte le manipulateur. Cette caméra peut être positionnée à l'extrémité du bras manipulateur si l'on souhaite obtenir un point de vue local et précis sur la scène de travail. Cependant, un tel positionnement présente l'inconvénient de limiter le champ de vision de l'opérateur et ne permet pas de lui donner une vue globale de son environnement de travail. Pour que l'opération se déroule en toute sécurité il est souvent nécessaire de posséder un deuxième point de vue montrant le manipulateur dans la scène globale. Ce point de vue global est généralement obtenu au moyen d'une caméra motorisée de type PTZ (« Pan Tilt Zoom »).

Un des problèmes à résoudre dans un système de téléopération est de fournir à tout instant à l'opérateur un point de vue pertinent sur une zone d'intérêt. Pour certaines applications, l'environnement dans lequel se déplace le manipulateur est parfaitement connu, maîtrisé et libre d'obstacles. Dans ce cas des solutions utilisant une ou plusieurs caméras fixes dans l'environnement peuvent suffirent. Néanmoins, lorsque l'on souhaite suivre un point mobile, celui-ci peut se retrouver en dehors du champ de vision ou encore occulté par la présence d'objets de l'environnement voire par le manipulateur lui-même. L'image délivrée à l'opérateur est alors inexploitable. Un moyen de pallier ce problème est de motoriser la caméra et d'utiliser par exemple une caméra de type PTZ (Pan Tilt Zoom). Un second opérateur, apte à piloter le déplacement d'une telle caméra motorisée, peut alors mettre à jour la ligne de visée de la caméra manuellement. Un tel procédé peut aussi être automatisé en asservissant le point de vue de la caméra sur la zone d'intérêt dont la position est connue en permanence. Lorsque le manipulateur effectue un mouvement, la position du point d'intérêt est traduite en consigne de point de vue pour la caméra. Le point de vue de la caméra est ensuite mis à jour en fonction de cette consigne. Cette méthode produit de bons résultats lorsque la ligne de vision de la caméra est dégagée.

Le problème que se propose de résoudre la présente invention est donc de fournir en temps réel à l'opérateur qui manipule un objet à distance, une image pertinente de la scène dans laquelle il travaille. Une solution connue à ce problème consiste à placer une caméra sur un second engin robotisé dont la position est mise à jour par un deuxième opérateur. Cependant cette solution n'est pas satisfaisante car elle nécessite une intervention humaine. La production de cette image, et indirectement le réglage du point de vue de la caméra, doivent être, au contraire, effectués de façon automatique sans inclure un second opérateur chargé de corriger en permanence le point de vue pour obtenir un champ de vision libre sur l'objet à manipuler.

Pour remédier au problème précité, il existe différentes méthodes connues de l'état de la technique.

Les solutions les plus simples à mettre en oeuvre pour donner à l'opérateur un point de vue pertinent sont du type de celles décrites dans la demande internationale de brevet WO 2007/067167. La cible est localisée au moyen d'un émetteur positionné sur celle-ci et d'un récepteur couplé à la caméra motorisée. L'émetteur transmet en temps réel la position de la cible au récepteur qui communique cette information au système chargé de mettre à jour l'orientation de la caméra pour que sa ligne de visée soit toujours pointée vers la cible. Un tel dispositif est simple mais ne permet pas de fournir une image pertinente pour l'opérateur lorsque des obstacles occultant sont situés entre la caméra et la cible. Ce type de solution n'est pas adapté car l'environnement n'est pas pris en compte.

Une solution différente est développée dans le brevet JP 03287394 ainsi que dans l'article « Dynamic Sensor Planning in Visual Servoing », Eric Marchand, Greg D. Hager, ICRA '98. Elle consiste à obtenir un point de vue libre d'obstacles à partir d'une caméra montée sur un bras robotisé et ce en vue de pouvoir par la suite saisir l'objet ciblé sans problème. Les travaux décrits dans ce dernier document utilisent les techniques connues d'asservissements visuels. Ces techniques se basent sur la définition de fonction de coûts que l'on cherche à minimiser. Le coût de la fonction est déclaré comme étant minimum lorsque les objets cibles sont situés au centre de l'image et que les objets occultant sont en périphérie ou en dehors de l'image. On cherche alors en permanence à adapter la position de l'engin robotisé pour que la projection de l'objet cible sur l'image et donc sa surface représentative sur l'image soit toujours la plus grande possible en proportion par rapports aux autres objets de la scène.

Une autre solution connue de l'art antérieur utilise des méthodes dites de planification de chemin référencée modèle ou « path planning » en anglais. En se basant sur un modèle géométrique de la scène, ces méthodes visent un moyen permettant de relier un point A à un point B en évitant les obstacles. Un exemple de mise en oeuvre d'une telle technique est décrit dans le brevet américain 5808887. En appliquant cette méthode à la problématique de la téléopération, il est possible de déterminer la nouvelle position de la caméra la plus proche de son point de départ tel que l'on puisse tracer une ligne droite sans être gêné par un obstacle entre la cible et la nouvelle position de la caméra.

Un inconvénient important des techniques d'asservissements visuels et de planification de chemin est qu'elles sont toutes deux très gourmandes en calcul ce qui limite leur utilisation pour des applications temps-réel. De plus le problème majeur des méthodes d'asservissement visuel est qu'elles sont dépendantes de la qualité des images et nécessitent des contrastes importants entre les différents objets de la scène pour obtenir une solution efficace. Elles sont également très sensibles aux effets de lumière ce qui est pénalisant dans un contexte où le support de la caméra peut bouger et l'incidence de la lumière sur les objets de la scène peut varier.

La présente demande de brevet a notamment pour objectif de résoudre les limitations précitées de l'art antérieur en proposant une solution peu couteuse en charge de calcul et insensible à la qualité de l'image, à l'éclairage ou aux contrastes de la scène.

A cet effet, la présente invention a pour objet un procédé d'aide à la manipulation d'au moins un premier engin mobile robotisé évoluant dans un environnement de travail encombré sous le contrôle d'au moins un second engin mobile robotisé, tel qu'un capteur ou un outil interagissant avec ledit environnement, caractérisé en ce qu'il comporte au moins les étapes suivantes :
○ modélisation d'une représentation virtuelle, en trois dimensions, de l'environnement de travail et des objets réels qu'il comporte,
○ détermination, dans l'environnement de travail, d'un point cible vers lequel est orientée la ligne de visée dudit second engin mobile robotisé,
○ détermination d'un point de référence de la position dudit second engin mobile robotisé,
○ construction, au sein de ladite représentation virtuelle, au moyen d'un moteur physique, d'un mécanisme virtuel s'étendant axialement entre le point cible et le point de référence et englobant sensiblement le segment reliant ces deux points auxquels il est virtuellement relié par des liaisons mécaniques,
○ détection, au moyen d'un moteur physique, d'une collision entre ledit mécanisme virtuel et un objet réel de l'environnement de travail dont la position est obtenue à partir de ladite représentation virtuelle,
○ calcul d'un torseur d'effort appliqué audit mécanisme virtuel résultant de sa collision avec ledit objet réel, la position dudit point cible restant inchangée,
○ détermination de la nouvelle position dudit mécanisme virtuel dans l'environnement de travail,
○ détermination de la nouvelle position dudit point de référence dudit second engin mobile robotisé, à partir de la nouvelle position dudit mécanisme virtuel de façon à ce que la ligne de visée entre ledit point de référence et ledit point cible soit libre d'obstacles.

Dans une variante de réalisation de l'invention, ledit premier engin mobile robotisé est un bras articulé et ledit point cible est sensiblement situé à l'extrémité dudit bras.

Dans une autre variante de réalisation de l'invention, ledit mécanisme virtuel présente une section transversale occupant sensiblement le champ de visée dudit second engin mobile robotisé.

Dans une autre variante de réalisation de l'invention, ledit mécanisme virtuel est constitué d'un ensemble de cylindres télescopiques.

Dans une autre variante de réalisation de l'invention, la liaison mécanique entre ledit mécanisme virtuel et ledit premier engin mobile robotisé au niveau du point cible est une liaison de type rotule.

Dans une autre variante de réalisation de l'invention, la liaison mécanique entre ledit mécanisme virtuel et ledit premier engin mobile robotisé au niveau du point cible est réalisée au moyen d'un asservissement de position, de manière à pouvoir modifier ledit point cible pendant le déroulement de la manipulation.

Dans une autre variante de réalisation de l'invention, ledit second engin mobile robotisé est une caméra et ledit point de référence est situé sur l'axe optique à une distance de la caméra sensiblement égale à sa distance focale.

Dans une autre variante de réalisation de l'invention, ledit second engin mobile robotisé est un laser télémétrique ou un nettoyeur haute pression.

Dans une autre variante de réalisation de l'invention, ledit second engin mobile robotisé comporte un bras articulé.

Dans une autre variante de réalisation de l'invention, ledit point de référence est relié virtuellement à un point solidaire dudit second engin mobile robotisé par l'intermédiaire d'une liaison mécanique virtuelle de type ressort.

Dans une autre variante de réalisation de l'invention, ledit premier engin mobile robotisé est manipulé à distance par un opérateur.

L'invention a également pour objet un système de téléopération pour la manipulation à distance d'au moins un premier engin robotisé évoluant dans un environnement de travail encombré à partir d'un bras articulé maître actionné par un opérateur, les mouvements dudit bras maître étant reproduits par ledit premier engin robotisé par l'intermédiaire de moyens de capture, de transmission et de reproduction des mouvements, caractérisé en ce qu'il comporte en outre au moins un second engin mobile robotisé actionné par des moyens de commande, une base de données contenant une représentation virtuelle en trois dimensions de l'environnement de travail ,un moteur physique logiciel apte à détecter et analyser les collisions entre deux objets que comporte ledit environnement de travail et des moyens permettant de mettre en oeuvre le procédé selon l'invention d'aide à la manipulation à distance dudit premier engin robotisé

Dans une variante de réalisation de l'invention, ledit premier engin robotisé comporte un bras articulé.

Dans une variante de réalisation de l'invention, ledit second engin mobile robotisé est une caméra, un laser de télémétrie ou un nettoyeur haute pression couplé ou non à un bras articulé.

Dans une variante de réalisation de l'invention, ladite représentation virtuelle en trois dimensions est produite par un logiciel de conception assistée par ordinateur.

D'autres caractéristiques apparaîtront à la lecture de la description détaillée donnée à titre d'exemple et non limitative qui suit faite en regard de dessins annexés qui représentent :
La figure 1, un schéma fonctionnel d'un ensemble de systèmes de téléopération mettant en oeuvre l'invention,
La figure 2, une représentation du manipulateur et du champ de vision de la caméra,
La figure 3a, une vue générale du manipulateur en train d'effectuer une tâche,
La figure 3b, une représentation de la vue obtenue avec une caméra ne tenant pas compte des problèmes d'occultations,
La figure 4a, la même vue générale que sur la figure 3a avec une caméra mettant en oeuvre le procédé selon l'invention
La figure 4b, la vue obtenue par la caméra mettant en oeuvre le procédé selon l'invention

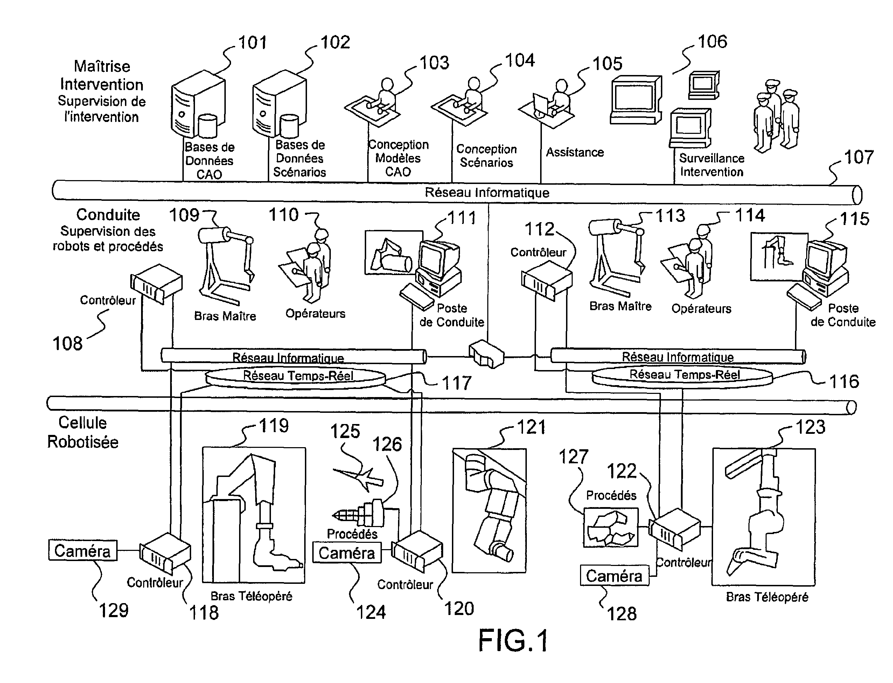

La figure 1 représente le synoptique d'un ensemble de systèmes de téléopération mis en oeuvre lors d'une intervention robotisée. L'invention s'applique notamment à un ou plusieurs de tels systèmes.

Dans cet exemple, un ou plusieurs opérateurs 110,114 manipulent à distance un ou plusieurs bras robotisés articulés 119,121,123. Un tel bras manipulateur permet la préhension et la manipulation d'objets à distance. Sans sortir du cadre de l'invention, un système de téléopération peut également inclure d'autres dispositifs robotisés téléopérés tels une pince 127 ou tout type d'outil 125 permettant à l'opérateur d'interagir avec l'environnement de travail dans lequel évolue le dispositif précité, par exemple une disqueuse, une cisaille, une visseuse ou encore une torche de soudage. La suite de la description se limite à l'exemple de réalisation de l'invention qui concerne un bras articulé téléopéré.

Une intervention robotisée de téléopération utilisant le procédé selon l'invention peut se décomposer fonctionnellement en trois sous ensembles : une cellule de maitrise d'oeuvre, un ensemble de postes de conduite et la cellule robotisée située à distance des opérateurs dans la scène de travail et dans laquelle se déroulent les opérations réelles.

La cellule de maitrise d'oeuvre a pour fonction de préparer l'intervention, d'envisager les scénarios et de créer des modèles en trois dimensions de la scène de travail qui serviront de support lors du déroulement des opérations. Cette cellule comporte au moins un poste 103 de conception de modèles virtuels de la scène de travail couplé à une base de données 101. Une telle conception peut être réalisée à l'aide de logiciels de conception assistée par ordinateurs (CAO). L'objectif visé est de fournir, dans une phase préalable à l'exécution du procédé selon l'invention, une représentation sous forme de modèle virtuel en trois dimensions de la scène de travail dans laquelle va évoluer l'engin téléopéré. Cette représentation comporte notamment tous les objets initialement présents dans l'environnement de travail. Un poste de conception des scénarios 104 couplé à une base de données 102 est utilisé pour définir préalablement des scénarios d'intervention qui peuvent consister notamment en des tâches nominales de production, une maintenance préventive ou nominale ou encore des interventions en situation accidentelle. Enfin on trouve également dans cette cellule un poste d'assistance 105 et un poste de surveillance 106. Les éléments composant la cellule de maitrise d'oeuvre et les postes de conduite sont connectés entre eux par des moyens informatiques 107.

La cellule de conduite comporte au moins un opérateur 110,114 qui interagit à distance avec la scène de travail par l'intermédiaire d'un bras maître 109,113 et un poste de conduite 111,115 qui permet de visualiser la représentation courante du manipulateur dans le monde virtuel à l'aide d'interfaces homme-machine et de retours vidéo transmis par au moins une caméra 124,128,129 installée dans la zone opérationnelle. Dans les systèmes les plus évolués, le bras maître 109,113 est doté d'un retour d'effort spatial permettant ainsi d'améliorer la perception de l'opérateur. Celui-ci ressent alors les efforts qu'il applique sur l'environnement par l'intermédiaire du système téléopéré. Chaque bras maître 109,113 est relié à un contrôleur 108,112 qui a notamment pour fonction de transmettre et recevoir les informations de position et de mouvement permettant de faire interagir le bras maître et le bras manipulateur 119,121,123. A cet effet, le contrôleur 108,112 du bras maître est relié, par l'intermédiaire d'un réseau temps-réel 116,117, à un contrôleur 118,120,122 équivalent qui pilote le bras manipulateur 119,121,123 ou bras esclave. La capture en temps réel des mouvements du bras manipulateur est effectuée par le biais de capteurs de position articulaires tels que des resolvers, codeurs, potentiomètres ou capteurs électriques passifs de type LVDT (« Liner Variable Differential Transformer »).

La cellule robotisée comporte, en outre des éléments précités, une caméra 124,128,129 associée à chaque manipulateur 119,121,123 et préférablement positionnée sur un second bras articulé. Cette caméra a pour fonction d'offrir un point de vue pertinent de la scène de travail à l'opérateur, elle est reliée à cet effet au contrôleur 118,122,124 qui transmet la séquence vidéo vers le poste de conduite 111,115 par l'intermédiaire du réseau informatique 107.

Lorsque le manipulateur se déplace dans son environnement de travail, en particulier lorsque celui-ci est encombré, il est nécessaire, afin de garantir une sécurité optimale, de mettre en oeuvre une surveillance automatisée des collisions éventuelles entre le manipulateur et son environnement. Cette surveillance est effectuée par un moteur physique logiciel. La fonction première d'un moteur physique est de simuler des phénomènes physiques. Il a pour fonction d'une part de détecter et de gérer les collisions entre deux objets de la représentation virtuelle de la scène de travail, d'autre part de résoudre des systèmes d'équations des phénomènes physiques à représenter. Dans le système selon l'invention, le moteur physique est dit à résolution de contraintes. Pour chaque objet de la scène, le moteur physique possède une représentation physique dudit objet sous la forme d'un maillage. A partir des positions et vitesses respectives de deux objets, le moteur calcule un torseur d'effort. Dans le cas d'une collision entre le manipulateur et un objet fixe de la scène, le moteur va déterminer le torseur d'effort à appliquer au manipulateur pour qu'il contourne l'objet au lieu de le percuter. Une contrainte est imposée au mouvement du manipulateur mais il n'y a pas d'arrêt du à la collision. Le moteur physique détermine les efforts à appliquer à chaque objet pour que le système retrouve une position d'équilibre.

En fonction des besoins de l'application, le moteur physique peut être soit exécuté sur le poste de conduite 111,115 lorsque les contraintes liées à une exécution temps-réelle sont souples, soit directement sur le réseau temps-réel 116,117 si un temps-réel strict est requis. Sans sortir du cadre de l'invention, le moteur physique peut également permettre à l'opérateur de ressentir des efforts non seulement sur des éléments réels mais aussi dans la représentation virtuelle de la scène. Il est ainsi possible de contraindre les mouvements de l'engin téléopéré dans une direction qui facilite la tâche à accomplir.

Comme précédemment explicité, le problème technique que cherche à résoudre la présente invention consiste à fournir en temps-réel à l'opérateur une vue pertinente de la scène de travail même lorsqu'un objet s'introduit dans le champ de vision de la caméra et obture ainsi la vue de l'opérateur.

La solution mise en oeuvre par le procédé selon l'invention est basée sur l'utilisation des propriétés du moteur physique précédemment décrit qui est implanté dans le système de téléopération à des fins de supervision.

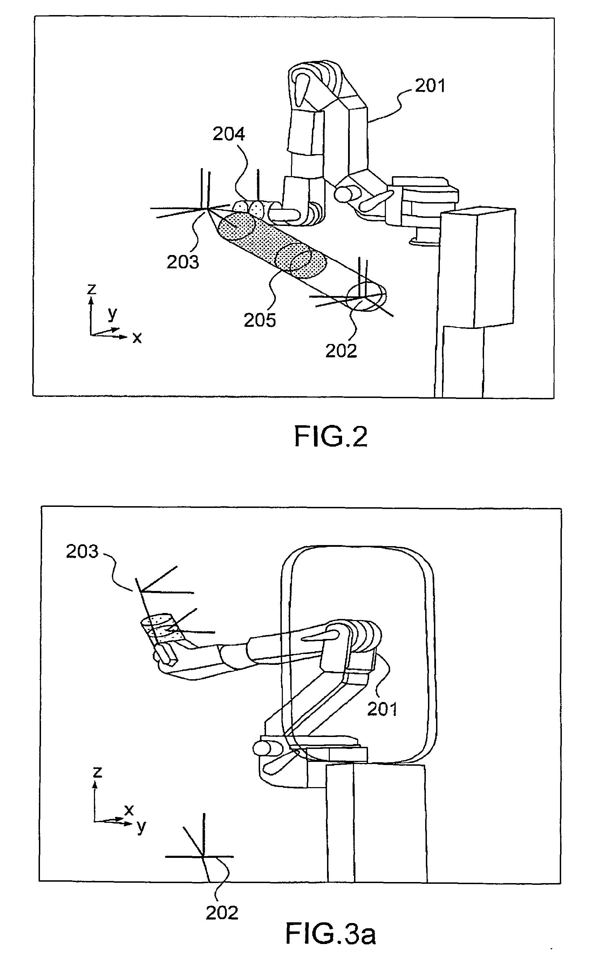

La figure 2 schématise un exemple de mise en oeuvre du procédé selon l'invention à l'aide d'une représentation virtuelle de la scène de travail. Un bras articulé 201 est téléopéré à distance pour manipuler un objet représenté par un point cible 203. Une caméra, préférablement positionnée sur un second bras non représenté, filme le point cible afin de fournir à l'opérateur une vue précise de son environnement de travail. La caméra est représentée sur la figure 2 par son point focal 202.

Au même titre que chaque autre objet ou élément de la scène, un mécanisme virtuel 205 matérialisant le champ de vision de la caméra est introduit dans la représentation virtuelle de la scène. Dans la suite de la description, le terme mécanisme est utilisé pour désigner une combinaison de pièces ou d'organes agencés en vue d'un mouvement ou d'un fonctionnement d'ensemble. La création d'un tel mécanisme 205 est possible grâce aux moyens de conception de modèles virtuels mis en oeuvre par la cellule de maitrise d'oeuvre. Ce mécanisme virtuel 205, qui n'a pas d'existence réelle, est conçu de façon à s'étendre axialement entre le point focal de la caméra 202 et le point cible 203, occupant ainsi essentiellement le champ de vision de la caméra. Dans une variante de réalisation de l'invention, le point 202 servant de référence pour le positionnement de la caméra peut également être un point situé sur l'axe focal de la caméra à une distance de celle-ci sensiblement égale à la distance focale. Le mécanisme 205 est défini par un maillage de géométrie parfaitement connue, tout comme les autres objets de la scène qui sont des représentations d'objets réels. Il peut s'agir, par exemple d'un ensemble de cylindres télescopiques, comme représenté sur la figure 2, de longueur totale égale à la distance entre le point focal 202 et le point cible 203 et de diamètre égal à une valeur prédéterminée en fonction du champ de vision de la caméra. La forme du mécanisme virtuel 205 n'est pas limitée à un ensemble de cylindres. En particulier, sa section transversale peut être constante de forme quelconque, circulaire, hexagonale, rectangulaire ou autre et peut également varier de façon à ce que ce mécanisme 205 forme un cône ou un tronc de cône.

Le mécanisme virtuel 205 est relié par des liaisons mécaniques virtuelles aux points focal 202 et cible 203 et, dans l'exemple de réalisation de l'invention illustré à la figure 2, les extrémités du dit mécanisme se déplacent d'une part avec le mouvement de l'extrémité du manipulateur 201 et d'autre part avec le point focal de la caméra 202. Ce mécanisme 205 est pris en compte par le moteur physique comme si il était réel. Ainsi, les collisions entre le mécanisme virtuel 205 et d'autres objets de la scène ou une partie du bras articulé 201 sont détectées par le moteur physique. Ce dernier détermine l'effort à appliquer au mécanisme virtuel 205 suite à un contact avec un autre objet et donc sa nouvelle position après collision avec ledit objet. Le mouvement du mécanisme virtuel 205, entraine ensuite indirectement le mouvement du point focal de la caméra auquel il est rattaché avec la contrainte que le point cible est rattaché à la zone d'intérêt. A partir de la nouvelle position du mécanisme virtuel 205, une position mise à jour de la caméra 202 est déterminée et cette position est transmise sous la forme d'une consigne de position cartésienne au contrôleur 118 qui pilote ensuite le déplacement de la caméra 202 vers sa nouvelle position, de façon à fournir à l'opérateur un point de vue libre d'obstacles, que ce soit au travers de la caméra réelle ou bien également d'une caméra virtuelle qui calculera une représentation du modèle géométrique vue du point considéré.

L'introduction du mécanisme virtuel 205 dans l'environnement de travail et la prise en compte des collisions de cet objet avec d'autres éléments permet d'assurer qu'aucun objet réel ne peut exister en superposition avec le mécanisme virtuel. Or, comme celui-ci est conçu de manière à occuper le champ de vision de la caméra qui pointe vers le point cible pour lequel on souhaite fournir une vue pertinente, on garantie alors que le champ de vision de la caméra est toujours libre d'obstacles et que l'opérateur ne sera ainsi jamais gêné. Le moteur physique détermine, dès qu'il y a collision entre le mécanisme virtuel 205 et un objet réel, la nouvelle position du mécanisme virtuel 205 et indirectement celle du point focal de la caméra qui se déplace pour permettre la meilleure prise de vue.

Dans une variante de réalisation de l'invention, le point focal 202 de la caméra est virtuellement contraint à un point de référence fixe, par exemple un point solidaire de la base du deuxième bras articulé qui supporte la caméra, par une liaison mécanique de type ressort afin de contraindre le déplacement de la caméra et limiter volontairement ses mouvements. En effet, le confort visuel de l'opérateur est meilleur si les mouvements de la caméra sont limités, et de plus des limitations mécaniques restreignent le déplacement de la caméra.

Dans une autre variante de réalisation de l'invention, la liaison mécanique entre le mécanisme virtuel 205 et le bras articulé 201 au niveau du point cible 203 est établie de manière permanente. Elle prolonge la description cinématique du bras articulé 201, de manière à ce que, dans le modèle en trois dimensions, le bras manipulateur 201 et le mécanisme virtuel 205 ne fassent plus qu'un seul et même mécanisme. Pour limiter les déplacements de la caméra, ils sont alors reliés entre eux au niveau du point cible par une liaison mécanique de type rotule 204 introduite dans le modèle en trois dimensions de la scène.

Dans une autre variante de réalisation de l'invention, la liaison entre le mécanisme virtuel 205 et le bras articulé 201 au niveau du point cible 203 est réalisée au moyen d'un asservissement de position de manière à ce qu'il soit possible de changer de cible pendant le déroulement de la tâche.

Dans une autre variante de réalisation de l'invention, la caméra peut être remplacée par tout type de capteur ou d'outil qui nécessite un champ libre entre le point cible et lui, par exemple un laser de télémétrie ou un nettoyeur haute pression à jet d'eau.

La figure 3a représente le positionnement du manipulateur 201 mis en oeuvre pour la maintenance d'un tunnelier dans une vue globale virtuelle en trois dimensions. La caméra est représentée par son point focal 202 qui est fixe. Le point cible 203 est localisé à l'extrémité du bras articulé.

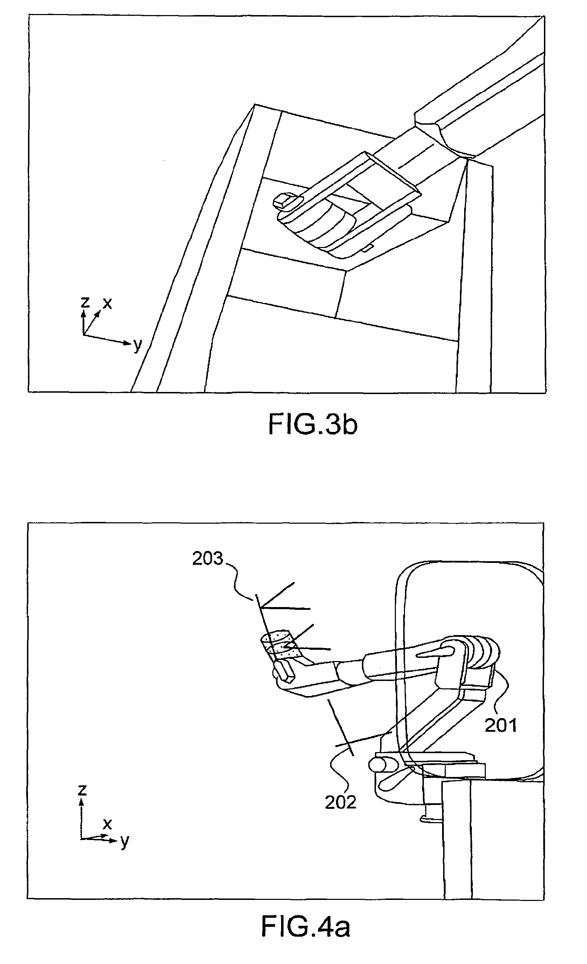

La figure 3b représente la vue obtenue par la caméra dans le scénario de la figure 3a. On remarque que la cible est obturée par le manipulateur qui est situé dans le champ de vision de la caméra.

La figure 4a représente un scénario dans lequel le procédé selon l'invention est mis en oeuvre pour déterminer de façon automatique le positionnement le plus pertinent pour le point focal 202 de la caméra afin de conserver à tout moment un champ de vision libre sur le point cible. On remarque que le point focal 202 a été déplacé par rapport à sa position initiale de la figure 3a de façon à libérer le champ de vision de la caméra.

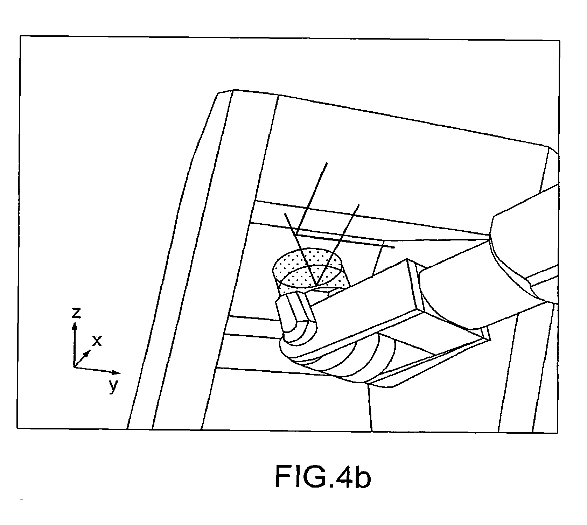

La figure 4b montre la vue obtenue par la caméra déplacée de façon automatique pour laisser son champ de vision en direction du point cible libre d'obstacles lorsque le procédé selon l'invention est mis en oeuvre.

Le procédé et le système selon l'invention permettent de fournir de façon automatique à l'opérateur une vue pertinente de la zone de travail en exploitant les propriétés d'un moteur physique à détection de collision et d'une représentation virtuelle en trois dimensions de la scène de travail. La méthode selon l'invention se réfère à un modèle en trois dimensions de la scène, ce qui a pour avantage de ne pas dépendre de la qualité de l'image filmée. Sans sortir du cadre de l'invention, la modélisation virtuelle de la scène peut être plus minimaliste, sans forcément fournir un maillage très détaillé de chaque objet. La modélisation doit être suffisante pour permettre au moteur physique de mettre en oeuvre une détection de collision entre deux objets. De plus, l'invention s'étend également à tout type de systèmes automatisés pour lesquels il est nécessaire d'offrir une ligne de visée libre d'obstacles à un engin robotisé, capteur ou autre, qui interagit avec des objets dans son environnement de travail. En particulier, l'engin robotisé n'est pas forcément téléopéré à distance par un opérateur.

## Revendications

1. Procédé d'aide à la manipulation d'au moins un premier engin mobile robotisé (201) évoluant dans un environnement de travail encombré sous le contrôle d'au moins un second engin mobile robotisé, tel qu'un capteur ou un outil interagissant avec ledit environnement, **caractérisé en ce qu'**il comporte au moins les étapes suivantes :
○ modélisation d'une représentation virtuelle, en trois dimensions, de l'environnement de travail et des objets réels qu'il comporte,
○ détermination, dans l'environnement de travail, d'un point cible (203) vers lequel est orientée la ligne de visée dudit second engin mobile robotisé,
○ détermination d'un point de référence (202) de la position dudit second engin mobile robotisé,
○ construction, au sein de ladite représentation virtuelle, au moyen d'un moteur physique, d'un mécanisme virtuel (205) s'étendant axialement entre le point cible (203) et le point de référence (202) et englobant sensiblement le segment reliant ces deux points (202,203) auxquels il est virtuellement relié par des liaisons mécaniques,
○ détection, au moyen d'un moteur physique, d'une collision entre ledit mécanisme virtuel (205) et un objet réel de l'environnement de travail dont la position est obtenue à partir de ladite représentation virtuelle,
○ calcul d'un torseur d'effort appliqué audit mécanisme virtuel (205) résultant de sa collision avec ledit objet réel, la position dudit point cible (203) restant inchangée,
○ détermination de la nouvelle position dudit mécanisme virtuel (205) dans l'environnement de travail,
○ détermination de la nouvelle position dudit point de référence (202) dudit second engin mobile robotisé, à partir de la nouvelle position dudit mécanisme virtuel (205) de façon à ce que la ligne de visée entre ledit point de référence (202) et ledit point cible (203) soit libre d'obstacles.

2. Procédé selon l'une des revendications précédentes **caractérisé en ce que** ledit premier engin mobile robotisé (201) est un bras articulé et que ledit point cible (203) est sensiblement situé à l'extrémité dudit bras.

3. Procédé selon l'une des revendications précédentes **caractérisé en ce que** ledit mécanisme virtuel (205) présente une section transversale occupant sensiblement le champ de visée dudit second engin mobile robotisé.

4. Procédé selon l'une des revendications précédentes **caractérisé en ce que** ledit mécanisme virtuel (205) est constitué d'un ensemble de cylindres télescopiques.

5. Procédé selon l'une des revendications précédentes **caractérisé en ce que** la liaison mécanique entre ledit mécanisme virtuel (205) et ledit premier engin mobile robotisé (201) au niveau du point cible (203) est une liaison de type rotule.

6. Procédé selon l'une des revendications 1 à 4 **caractérisé en ce que** la liaison mécanique entre ledit mécanisme virtuel (205) et ledit premier engin mobile robotisé (201) au niveau du point cible (203) est réalisée au moyen d'un asservissement de position, de manière à pouvoir modifier ledit point cible (203) pendant le déroulement de la manipulation.

7. Procédé selon l'une des revendications précédentes **caractérisé en ce que** ledit second engin mobile robotisé est une caméra et ledit point de référence (202) est situé sur l'axe optique à une distance de la caméra sensiblement égale à sa distance focale.

8. Procédé selon l'une des revendications 1 à 6 **caractérisé en ce que** ledit second engin mobile robotisé est un laser télémétrique ou un nettoyeur haute pression.

9. Procédé selon l'une des revendications précédentes **caractérisé en ce que** ledit second engin mobile robotisé comporte un bras articulé.

10. Procédé selon l'une des revendications précédentes **caractérisé en ce que** ledit point de référence (202) est relié virtuellement à un point solidaire dudit second engin mobile robotisé par l'intermédiaire d'une liaison mécanique virtuelle de type ressort.

11. Procédé selon l'une des revendications précédentes **caractérisé en ce que** ledit premier engin mobile robotisé (201) est manipulé à distance par un opérateur.

12. Système de téléopération pour la manipulation à distance d'au moins un premier engin (119,121,123) robotisé évoluant dans un environnement de travail encombré à partir d'un bras articulé maître (109,113) actionné par un opérateur (110,114), les mouvements dudit bras maître (109,113) étant reproduits par ledit premier engin robotisé (119,121,123) par l'intermédiaire de moyens de capture (108,112), de transmission (116,117) et de reproduction (118,120,122) des mouvements, **caractérisé en ce qu'**il comporte en outre au moins un second engin mobile robotisé (124,128,129) actionné par des moyens de commande, une base de données (101) contenant une représentation virtuelle en trois dimensions de l'environnement de travail ,un moteur physique logiciel apte à détecter et analyser les collisions entre deux objets que comporte ledit environnement de travail et des moyens permettant de mettre en oeuvre le procédé d'aide à la manipulation à distance dudit premier engin robotisé (119,121,123) selon l'une des revendications 1 à 11.

13. Système de téléopération selon la revendication 12 **caractérisé en ce que** ledit premier engin robotisé (119,121,123) comporte un bras articulé.

14. Système de téléopération selon l'une des revendications 12 à 13 **caractérisé en ce que** ledit second engin mobile robotisé (124,128,129) est une caméra, un laser de télémétrie ou un nettoyeur haute pression couplé ou non à un bras articulé.

15. Système de téléopération selon l'une des revendications 12 à 14 **caractérisé en ce que** ladite représentation virtuelle en trois dimensions est produite par un logiciel de conception assistée par ordinateur.

## Patentansprüche

1. Verfahren zur Unterstützung bei der Handhabung von wenigstens einer ersten mobilen robotischen Maschine (201), die sich in einer überfüllten Arbeitsbewegung unter der Steuerung von wenigstens einer zweiten mobilen robotischen Maschine bewegt, wie z.B. ein Sensor oder ein Werkzeug, der/das mit der Umgebung interagiert, **dadurch gekennzeichnet, dass** es wenigstens die folgenden Schritte beinhaltet:
○ Modellieren einer virtuellen dreidimensionalen Darstellung der Arbeitsumgebung und der darin enthaltenen realen Objekte;
○ Ermitteln, in der Arbeitsumgebung, eines Zielpunkts (203), auf den die Sichtlinie der zweiten mobilen robotischen Maschine ausgerichtet ist;
○ Ermitteln eines Referenzpunkts (202) der Position der zweiten mobilen robotischen Maschine;
○ Konstruieren, innerhalb der virtuellen Darstellung, mittels einer Physik-Engine, eines virtuellen Mechanismus (205), der axial zwischen dem Zielpunkt (203) und dem Referenzpunkt (202) verläuft und das diese beiden Punkte (202, 203) verbindende Segment im Wesentlichen umgibt, mit denen es durch mechanische Verbindungsglieder virtuell verbunden ist;
○ Erkennen, mittels einer Physik-Engine, einer Kollision zwischen dem virtuellen Mechanismus (205) und einem realen Objekt in der Arbeitsumgebung, dessen Position auf der Basis der virtuellen Darstellung erhalten wird;
○ Berechnen einer auf den virtuellen Mechanismus (205) aufgebrachten Torsionskraft aufgrund seiner Kollision mit dem realen Objekt, wobei die Position des Zielpunkts (203) unverändert bleibt;
○ Ermitteln der neuen Position des virtuellen Mechanismus (205) in der Arbeitsumgebung;
○ Ermitteln der neuen Position des Referenzpunkts (202) der zweiten mobilen robotischen Maschine auf der Basis der neuen Position des virtuellen Mechanismus (205), so dass die Sichtlinie zwischen dem Referenzpunkt (202) und dem Zielpunkt (203) frei von Hindernissen ist.

2. Verfahren nach dem vorherigen Anspruch, **dadurch gekennzeichnet, dass** die erste mobile robotische Maschine (201) ein Gelenkarm ist, und dadurch, dass sich der Zielpunkt (203) im Wesentlichen am Ende des Arms befindet.

3. Verfahren nach einem der vorherigen Ansprüche, **dadurch gekennzeichnet, dass** der virtuelle Mechanismus (205) einen transversalen Querschnitt hat, der im Wesentlichen das Sichtfeld der zweiten mobilen robotischen Maschine einnimmt.

4. Verfahren nach einem der vorherigen Ansprüche, **dadurch gekennzeichnet, dass** der virtuelle Mechanismus (205) von einem Satz teleskopischer Zylinder gebildet wird.

5. Verfahren nach einem der vorherigen Ansprüche, **dadurch gekennzeichnet, dass** das mechanische Verbindungsglied zwischen dem virtuellen Mechanismus (205) und der ersten mobilen robotischen Maschine (201) am Zielpunkt (203) ein Verbindungsglied des Kugelgelenktyps ist.

6. Verfahren nach einem der Ansprüche 1 bis 4, **dadurch gekennzeichnet, dass** das mechanische Verbindungsglied zwischen dem virtuellen Mechanismus (205) und der ersten mobilen robotischen Maschine (201) am Zielpunkt (203) mittels einer Positionssteuerung realisiert wird, so dass der Zielpunkt (203) beim Ablauf der Handhabung modifiziert werden kann.

7. Verfahren nach einem der vorherigen Ansprüche, **dadurch gekennzeichnet, dass** die zweite mobile robotische Maschine eine Kamera ist und der Referenzpunkt (202) sich auf der optischen Achse in einem Abstand von der Kamera befindet, der im Wesentlichen gleich ihrer Brennweite ist.

8. Verfahren nach einem der Ansprüche 1 bis 6, **dadurch gekennzeichnet, dass** die zweite mobile robotische Maschine ein Telemetrielaser oder ein Hochdruckreiniger ist.

9. Verfahren nach einem der vorherigen Ansprüche, **dadurch gekennzeichnet, dass** die zweite mobile robotische Maschine einen Gelenkarm umfasst.

10. Verfahren nach einem der vorherigen Ansprüche, **dadurch gekennzeichnet, dass** der Referenzpunkt (202) virtuell mit einem festen Punkt der zweiten mobilen robotischen Maschine über ein virtuelles mechanisches Verbindungsglied des Federtyps verbunden ist.

11. Verfahren nach einem der vorherigen Ansprüche, **dadurch gekennzeichnet, dass** die erste mobile robotische Maschine (201) von einem Bediener aus der Ferne gehandhabt wird.

12. Fernbediensystem zum Fernhandhaben wenigstens einer ersten robotischen Maschine (119, 121, 123), die sich in einer überfüllten Arbeitsumgebung bewegt, auf der Basis eines von einem Bediener (110, 114) aktivierten Hauptgelenkarms (109, 113), wobei die Bewegungen des Hauptarms (109, 113) von der ersten robotischen Maschine (119, 121, 123) mit Mitteln zum Erfassen (108, 112), Übertragen (116, 117) und Reproduzieren (118, 120, 122) von Bewegungen reproduziert werden, **dadurch gekennzeichnet, dass** es ferner wenigstens eine zweite mobile robotische Maschine (124, 128, 129) umfasst, die durch Steuermittel aktiviert wird, wobei eine Datenbank (101) eine virtuelle dreidimensionale Darstellung der Arbeitsumgebung, Physik-Engine-Software zum Erkennen und Analysieren der Kollisionen zwischen zwei in der Arbeitsumgebung befindlichen Objekten und Mittel zum Ausführen des Verfahrens zum Unterstützen bei der Fernhandhabung der ersten mobilen robotischen Maschine (119, 121, 123) nach einem der Ansprüche 1 bis 11 enthält.

13. Fernbediensystem nach Anspruch 12, **dadurch gekennzeichnet, dass** die erste robotische Maschine (119, 121, 123) einen Gelenkarm umfasst.

14. Fernbediensystem nach einem der Ansprüche 12 bis 13, **dadurch gekennzeichnet, dass** die zweite mobile robotische Maschine (124, 128, 129) eine Kamera, ein Telemetrielaser oder ein Hochdruckreiniger ist, der mit einem Gelenkarm gekoppelt ist oder nicht.

15. Fernbediensystem nach einem der Ansprüche 12 bis 14, **dadurch gekennzeichnet, dass** die virtuelle dreidimensionale Darstellung durch eine computergestützte Design-Software erzeugt wird.

## Claims

1. A method for assisting in the handling of at least one first robotised mobile craft (201) moving in a congested working environment under the control of at least one second robotised mobile craft, such as a sensor or a tool interacting with said environment, **characterised in that** it comprises at least the following steps:
○ modelling a virtual three-dimensional representation of the working environment and of real objects contained therein;
○ determining, in the working environment, a target point (203), toward which the line of sight of said second robotised mobile craft is oriented;
○ determining a reference point (202) of the position of said second robotised mobile craft;
○ constructing, within said virtual representation, by means of a physics engine, a virtual mechanism (205) axially extending between said target point (203) and said reference point (202) and substantially encapsulating the segment connecting these two points (202, 203), with which it is virtually connected by mechanical links;
○ detecting, by means of a physics engine, a collision between said virtual mechanism (205) and a real object in the working environment, the position of which is obtained on the basis of said virtual representation;
○ calculating a torsional force applied to said virtual mechanism (205) resulting from its collision with said real object, with the position of said target point (203) remaining unchanged;
○ determining the new position of said virtual mechanism (205) in the working environment;
○ determining the new position of said reference point (202) of said second robotised mobile craft on the basis of the new position of said virtual mechanism (205), so that the line of sight between said reference point (202) and said target point (203) is free of obstacles.

2. The method according to any one of the preceding claims, **characterised in that** said first robotised mobile craft (201) is an articulated arm, and **in that** said target point (203) is substantially located on the end of said arm.

3. The method according to any one of the preceding claims, **characterised in that** said virtual mechanism (205) has a transverse cross-section substantially occupying the field of sight of said second robotised mobile craft.

4. The method according to any one of the preceding claims, **characterised in that** said virtual mechanism (205) is constituted by a set of telescopic cylinders.

5. The method according to any one of the preceding claims, **characterised in that** the mechanical link between said virtual mechanism (205) and said first robotised mobile craft (201) at said target point (203) is a link of the ball joint type.

6. The method according to any one of claims 1 to 4, **characterised in that** the mechanical link between said virtual mechanism (205) and said first robotised mobile craft (201) at said target point (203) is realised by means of a position control so as to be able to modify said target point (203) during the handling sequence.

7. The method according to any one of the preceding claims, **characterised in that** said second robotised mobile craft is a camera and said reference point (202) is located on the optical axis at a distance from said camera that is substantially equal to its focal length.

8. The method according to any one of claims 1 to 6, **characterised in that** said second robotised mobile craft is a telemetry laser or a high-pressure cleaner.

9. The method according to any one of the preceding claims, **characterised in that** said second robotised mobile craft comprises an articulated arm.

10. The method according to any one of the preceding claims, **characterised in that** said reference point (202) is virtually connected to a point integral with said second robotised mobile craft by means of a virtual mechanical link of the spring type.

11. The method according to any one of the preceding claims, **characterised in that** said first robotised mobile craft (201) is remotely handled by an operator.

12. A remote operating system for remotely handling at least one first robotised craft (119, 121, 123) moving in a congested working environment from a master articulated arm (109, 113) activated by an operator (110, 114), with the movements of said master arm (109, 113) being reproduced by said first robotised craft (119, 121, 123) using means for capturing (108, 112), transmitting (116, 117) and reproducing (118, 120, 122) movements, **characterised in that** it further comprises at least one second robotised mobile craft (124, 128, 129) activated by control means, a database (101) containing a virtual three-dimensional representation of the working environment, a physics engine software designed to detect and analyse collisions between two objects contained within said working environment and means for implementing the method for assisting in the remote handling of said first robotised craft (119, 121, 123) according to any one of claims 1 to 11.

13. The remote operating system according to claim 12, **characterised in that** said first robotised craft (119, 121, 123) comprises an articulated arm.

14. The remote operating system according to any one of claims 12 to 13, **characterised in that** said second robotised mobile craft (124, 128, 129) is a camera, a telemetry laser or a high-pressure cleaner that may or may not be coupled to an articulated arm.

15. The remote operating system according to any one of claims 12 to 14, **characterised in that** said virtual three-dimensional representation is produced by a computer-assisted design software.
